# EUROPEAN PATENT APPLICATION

(11) **EP 4 428 577 A1**
(43) Date of publication of application: **11.09.2024**
(21) Application number: 24162465.9
(22) Date of filing: 08.03.2024
(51) Int. Cl.: G01S 17/88, G06F 16/29, G06T 7/246, G06T 7/73

(54) **METHOD, APPARATUS, DEVICE, STORAGE MEDIUM AND PROGRAM PRODUCT FOR TARGET POSITIONING**

(30) Priority: 08.03.2023 CN 202310239469
(71) Applicant: Beijing Zitiao Network Technology Co., Ltd., Beijing 100190 (CN)
(72) Inventor: GUO, Jia, Beijing, 100028 (CN); FANG, Chi, Beijing, 100028 (CN)
(74) Representative: Dentons UK and Middle East LLP

(57) **Abstract**

The present application provides a method, apparatus, device, storage medium and program product for target positioning. The method applied to a smart terminal includes: obtaining image data of a surrounding environment; generating a spatial image of the surrounding environment based on the image data; determining and obtaining the spatial image corresponding to a positioning target; generating anchor point information corresponding to the positioning target based on the corresponding spatial image; and determining a specific location of the positioning target using the spatial image and the anchor point information.

## Description

### CROSS-REFERENCE

The present application claims priority to Chinese Patent Application No. 202310239469.X, filed on March 08, 2023, and entitled "METHOD, APPARATUS, DEVICE, STORAGE MEDIUM AND PROGRAM PRODUCT FOR TARGET POSITIONING", the entirety of which is incorporated herein by reference.

### FIELD

The present application relates to virtual positioning field, and in particular to a method, apparatus, device, storage medium and program product for target positioning.

### BACKGROUND

At present, eXtended Reality (XR) technology has gradually entered people's lives and various related fields. The corresponding Augmented Reality (AR) and Virtual Reality (VR) devices build a virtual three-dimensional visual environment by closing people's vision, allowing people to achieve participation in the environment and achieve an immersive experience. Herein, XR devices may realize display, location tracking and positioning, multiple operating modes, and localized operation logic operations and graphics rendering for localized XR application through various sensors, cameras, display screens and other components.

However, related positioning and navigation technologies generally only provide users with approximate directions or region prompts and cannot achieve accurate point-to-point positioning. The current positioning accuracy may no longer meet the user's needs.

### SUMMARY

In view of this, the present application proposes a method, apparatus, device, storage medium and program product for target positioning to improve positioning accuracy and achieve accurate point-to-point positioning, thereby meeting the current user needs and improving user experience.

Based on the above purpose, the present application provides a method of target positioning, applied to a smart terminal and including:
obtaining image data of a surrounding environment; generating a spatial image of the surrounding environment based on the image data;
determining and obtaining the spatial image corresponding to a positioning target; generating anchor point information corresponding to the positioning target based on the corresponding spatial image; and
determining a specific location of the positioning target using the spatial image and the anchor point information.

In some implementations, the smart terminal includes a lidar;
obtaining the image data of the surrounding environment includes:
scanning, by the lidar, the surrounding environment, and generating point cloud image data based on a scanning result.

In some implementations, the smart terminal includes a depth sensor;
obtaining the image data of the surrounding environment includes:
detecting, by the depth sensor, a distance of an object in the surrounding environment, and generating depth image data based on a detecting result.

In some implementations, after generating the spatial image of the surrounding environment based on the image data, the method further includes:
outputting the spatial image to a cloud database for aggregating and storing, by the cloud database, the spatial image transmitted from the smart terminal and other smart terminals.

In some implementations, after generating the anchor point information corresponding to the positioning target based on the corresponding spatial image, the method further includes:
outputting the anchor point information to the cloud database for aggregating and storing, by the cloud database, a correspondence between the anchor point information and the corresponding spatial image.

In some implementations, generating the anchor point information corresponding to the positioning target based on the corresponding spatial image includes:
determining a boundary distance from at least one point on the positioning target to a boundary of the corresponding spatial image;
generating a three-dimensional coordinate system based on the corresponding spatial image; and determining, based on the boundary distance, a corresponding coordinate point or point set of the positioning target in the three-dimensional coordinate system to generate the anchor point information.

In some implementations, determining and obtaining the spatial image corresponding to the positioning target, and generating anchor point information corresponding to the positioning target based on the corresponding spatial image includes:
in response to the positioning target being a further smart terminal, determining whether a region where the further smart terminal is located has the corresponding spatial image;
in response to the region having the corresponding spatial image, obtaining the corresponding spatial image and sending a positioning instruction to the further smart terminal to generate the anchor point information by the further smart terminal.

In some implementations, determining the specific location of the positioning target includes:
obtaining and displaying network map data; inserting the spatial image at a location corresponding to the spatial image on the network map data; and loading the anchor point information into the spatial image to determine the specific location of the positioning target.

In some implementations, after loading the anchor point information into the spatial image, the method further includes:
positioning the positioning target in the network map data based on the spatial image loaded with the anchor point information to generate navigation information.

In some implementations, after generating anchor point information corresponding to the positioning target based on the corresponding spatial image, the method further includes:
outputting the anchor point information to an external network for other smart terminals to obtain the anchor point information; and determining the specific location of the corresponding positioning target using the anchor point information.

In some implementations, the positioning target at least includes: the smart terminal and a target input by a user through the smart terminal.

Based on the same concept, the present application further provides an apparatus for target positioning, applied to a smart terminal and including:
a generation module configured to obtain image data of a surrounding environment and generate a spatial image of the surrounding environment based on the image data;
a positioning module configured to determine and obtain the spatial image corresponding to a positioning target and generate anchor point information corresponding to the positioning target based on the corresponding spatial image; and
an outputting module configured to determine a specific location of the positioning target using the spatial image and the anchor point information.

Based on the same concept, the present application further provides an electronic device, including a memory, a processor and a computer program stored in the memory and executable on the processor. The processor implements, when executes the program, any of the methods described above.

Based on the same concept, the present application further provides a non-transitory computer readable storage medium having stored computer instructions for causing a computer to implement any of the methods described above.

Based on the same concept, the present application further provides a computer program product including computer program instructions. The computer program instructions, when running on a computer, cause the computer to perform any of the methods described above.

As may be seen from the above, the present application provides a method, apparatus, device, storage medium and program product for target positioning. The method applied to a smart terminal includes: obtaining image data of a surrounding environment; generating a spatial image of the surrounding environment based on the image data; determining and obtaining the spatial image corresponding to a positioning target; generating anchor point information corresponding to the positioning target based on the corresponding spatial image; and determining a specific location of the positioning target using the spatial image and the anchor point information. The present application generates a spatial image corresponding to the surrounding real environment as a reference for a specific location, and then generates anchor point information by establishing an anchor point for the specific target, and finally determines the specific location of the target in the spatial image based on the anchor point information. In this way, the relationship between the spatial image and the real map is used, so that when locating the target, the user may use the anchor point information to perform more accurate positioning and improve the positioning accuracy, so as to meet the current user needs and improve the user experience.

### BRIEF DESCRIPTION OF THE DRAWINGS

In order to more clearly illustrate the technical solutions in the present application or related technologies, the accompanying drawings required for use in the description of embodiments or related technologies will be briefly introduced below. Apparently, the accompanying drawings described below are only embodiments of the present application. For those skilled in the art, without creative labor, other drawings may also be obtained based on these drawings.
FIG. 1 is a schematic flow chart of a method of target positioning provided by the embodiments of the present application;
FIG. 2 is a schematic structural diagram of an apparatus for target positioning provided by the embodiments of the present application; and
FIG. 3 is a schematic structural diagram of an electronic device provided by the embodiments of the present application.

### DETAILED DESCRIPTION

To make the purpose, technical solutions and advantages of the present application more apparent, in conjunction of the following specific embodiments and with reference to the drawings, the present application is further described in detail.

It may be understood that before using the technical solutions disclosed in each embodiment of the present application, the user should be informed of the type, scope of use, usage scenarios, etc. of the personal information involved in the present application in an appropriate manner in accordance with relevant laws and regulations, and the user's authorization should be obtained.

For example, in response to receiving an active request from a user, prompt information is sent to the user to clearly remind the user that the operation requested to be performed will require obtaining and using the user's personal information. Therefore, users may autonomously choose whether to provide personal information to software or hardware such as electronic devices, applications, servers or storage medium that perform the operations of the technical solution of the present application based on the prompt information.

As an optional but non-limiting implementation, in response to receiving the user's active request, a method of sending prompt information to the user may be, for example, a pop-up window, and the prompt information may be presented in the form of text in the pop-up window. In addition, the pop-up window may also contain a selection control for the user to choose "agree" or "disagree" to provide personal information to the electronic device.

It may be understood that the above notification and obtaining user authorization processes are only illustrative and do not limit the implementations of the present application. Other methods that meet relevant laws and regulations may also be applied to the implementations of the present application.

It may be understood that the data involved in this technical solution (including but not limited to the data itself, the obtaining or use of the data) should comply with the requirements of corresponding laws, regulations and related regulations.

In order to make the purpose, technical solutions and advantages of this specification more clear, this specification will be further described in detail below with reference to specific embodiments and the accompanying drawings.

It should be noted that unless otherwise defined, the technical or scientific terms used in this application should be understood by those with general skills in the field to which this application belongs. The words "first", "second", and similar words used in this application do not indicate any order, quantity, or importance, but are only used to distinguish different components. Words like "including" or "containing" mean that elements or objects that appear before the word cover the elements or objects listed after the word and their equivalents, and do not exclude other elements, things or method steps. Words like "connecting" or "connected" are not limited to physical or mechanical connections, but may include electrical connections, whether direct or indirect. "Up", "down", "left", "right", etc. are only used to express relative positional relationships. When the absolute location of the described object changes, the relative positional relationship may also change accordingly.

As mentioned in the BACKGROUND section, XR technology refers to an environment that combines real and virtual and allows human-computer interaction, generated through computer technology and wearable devices. XR technology may be regarded as an umbrella term, including VR, AR, Mixed Reality (MR) and other new immersive technologies that may emerge due to technological advancement. XR is the general term for immersive virtual and reality fusion technology, from which different technical branches such as VR, AR, and MR are derived. VR may completely immerse people in a virtual environment; AR may generate a world overlaid with virtual content but cannot interact with the real environment; MR is a mixture of virtuality and reality, which may create virtual objects that may interact with the real environment. XR has special meaning in film, television, radio, and live entertainment production, and has become the mainstream of the virtual studio industry. Compared with green screen, the shooting effect of XR system is more realistic, and XR technology may create an infinite space in a limited space. At present, XR technology has gradually entered people's lives and various related fields. Technologies such as AR and VR in XR technology have been applied in shopping, games, entertainment, sports and fitness and other fields. Traditional positioning and navigation applications generally only provide users with approximate directions or region prompts and cannot achieve accurate point-to-point positioning. For example, it is impossible to tell a certain standing point in the crowd; a specific parking space in a parking garage; or a specific location of a smart device (mobile phone, headset) left behind, etc. As a result, the current positioning accuracy can no longer meet the user's needs.

Combined with the above actual situation, the embodiments of the present application provides a solution for target positioning. The present application generates a spatial image corresponding to the surrounding real environment as a reference for a specific location, and then generates anchor point information by establishing an anchor point for a specific target. Combined with the anchor point information, the specific location of the target in the spatial image is finally determined. In this way, a relationship between the spatial image and a real map is used, so that when positioning the target, the user may use the anchor point information to position the target more accurately and improve the positioning accuracy, so as to meet the current user needs and improve the user experience.

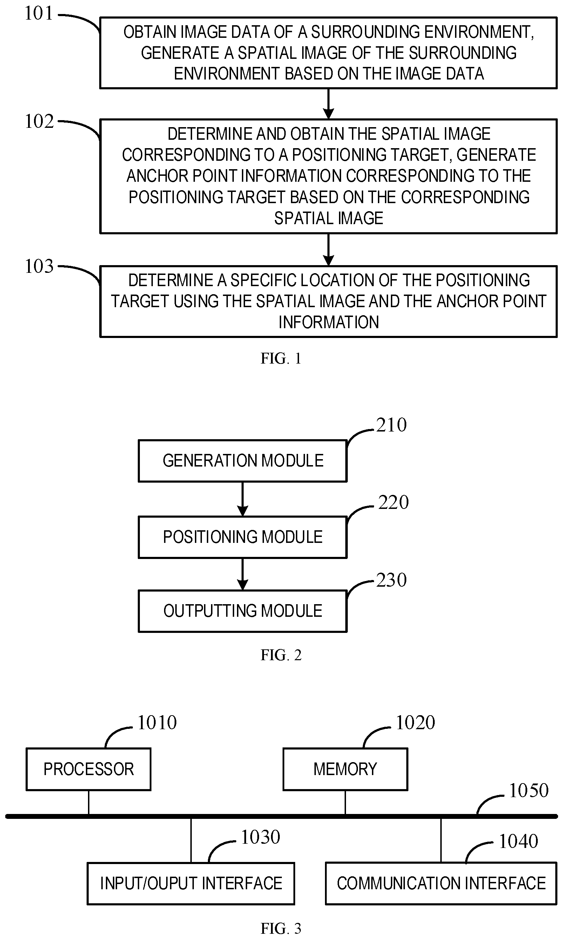

As shown in FIG. 1, it is a schematic flow chart of a method of target positioning proposed in the present application. This method is applied to a smart terminal, and specifically included the following steps.

At step 101, obtain image data of a surrounding environment and generate a spatial image of the surrounding environment based on the image data.

In some embodiments, a smart terminal refers to a modern smart electronic device that may perform certain numerical calculations, logical operations, have storage and memory functions, and may perform corresponding operations according to user instructions, such as: XR glasses, XR headsets, mobile phones, Pad etc. Then, image obtaining operations may be performed on the smart terminal by setting an image sensor, etc. Herein, the image sensor is a device that may receive external optical signals and process these optical signals into pictures, such as a camera. At the same time, the image sensor may also include a variety of optical receiving devices, such as ordinary cameras, infrared cameras, laser cameras, etc., to present pictures with different needs through different optical receiving devices.

Then, the smart terminal may obtain the image data of the smart terminal or the current user's surrounding environment through the image sensor. Through these image data, it may truly reflect the environment image of the smart terminal or the user's surroundings. In specific embodiments, some image sensors may be used to scan the smart terminal or the user's surroundings to obtain the image data of the surrounding environment and create the corresponding spatial image. The spatial image here is the data image that may truly reflect the surrounding environment. For example, the point cloud image, depth image, etc. of the surrounding environment. The ratio between these spatial images and the real environment may be set according to the specific scene, for example, set to 1: 1, 1:2, 1:5, etc.

In some embodiments, after obtaining the spatial image, the spatial image may be stored locally for later use; the spatial image may also be uploaded to a cloud database for storage; it may also be used in both ways at the same time, etc. Herein, the cloud database is used to store all spatial images uploaded by the smart terminal, and may establish correspondence between these spatial images and points on the map data, which facilitates storage and facilitates smart terminal obtaining the spatial image at the desired location later.

At step 102, determine and obtain the spatial image corresponding to a positioning target, and generate anchor point information corresponding to the positioning target based on the corresponding spatial image.

In some embodiments, the positioning target is a target object that the user wants to position. After completing step 101 here, the user may directly set the positioning target. For example, after generating a spatial image around a parking space, the parking space may be directly used as the positioning target. The user may also set the positioning target after a period of time. For example, if a user obtains an image of the office space and leaves the office, they may find that their phone has been forgotten in the office, and then use the mobile phone as the positioning target and so on.

Then, the anchor point information of the positioning target may be generated based on the spatial image corresponding to the positioning target. In some embodiments, the spatial image may be a spatial image obtained previously, or it may be a spatial image at the corresponding location found by the smart terminal in the local database or cloud database. After obtaining a positioning target, the location of the positioning target may be roughly confirmed based on related technologies. For example, the positioning target obtained is the parking space where the car was previously parked. Based on related technologies, it may be determined that the parking space is located in which building or parking lot (based on previous driving records, etc., multi-modal data collaborative inference may be used), and then it is possible to search for spatial images of corresponding buildings or parking lot. Or in the scenario of losing a mobile phone, based on related technologies, it is possible to first roughly know which building or area the mobile phone was left in, and then search for the spatial image of the corresponding building or area.

Then, it is necessary to determine the anchor point information of the positioning target in the spatial image. According to the foregoing, the positioning target may be determined directly by the user after completing step 101; it may also be determined by the user after a certain period of time. Furthermore, if it is the first case, the smart terminal may directly use the image sensor to obtain and calculate a relationship between the positioning target and the corresponding spatial image to determine an anchor point of the positioning target in the spatial image and generate anchor point information. Specifically, a boundary location of the corresponding spatial image in the real environment may be determined by the image sensor, and then the image sensor is used to calculate a distance between the positioning target and the boundary position, and then the calculation is adjusted based on a proportional relationship between the spatial image and the real environment. Finally, these distances are mapped into the spatial image, and finally the corresponding anchor point is generated in the spatial image. Then, if it is the second case, the location of the positioning target may not be near the current smart terminal. At the same time, the positioning target at this time should generally be a smart device (such as a mobile phone, etc.), so the smart terminal may send a positioning instruction to the smart device as the positioning target, so that the smart device determines its corresponding anchor point information based on the spatial image corresponding to its location (the confirmation process is similar to the first case, only the confirming actor has changed), and finally the anchor point information is given to the smart terminal.

In specific embodiments, since the spatial image itself corresponds directly to the real environment, the location of the positioning target can be directly positioned to a very accurate level through anchor point information, such as in which room, on which floor, at which location in the building, thereby using such anchor point information to provide a prerequisite for achieving accurate navigation in the future.

Finally, similar to step 101, after the corresponding anchor point information is generated, a storage operation may further be performed. For example, the anchor point information of a certain parking space may be stored for reuse. Similar to step 101, it may further store the anchor point information locally, store it in a cloud database, or use both methods at the same time, etc. In specific embodiments, the spatial image may be stored or uploaded together with the anchor point information; the spatial image may further be stored or uploaded first, and then the anchor point information may be stored or uploaded.

At step 103, determine a specific location of the positioning target using the spatial image and the anchor point information.

In some embodiments, after obtaining the anchor point information of the positioning target, it may be stored for user query. The timing of user query may be to view after the anchor point information is generated, or it may be to query after a certain interval of time. For example: in the scenario of positioning the parking space, the user may query after generating the anchor point information of the parking space after a period of time; in the scenario of losing a mobile phone, after generating anchor information for the lost phone, the user may directly need to view it, and so on. Furthermore, when the user needs to perform a query, if it is to query a pre-set positioning target, a corresponding query instruction may be generated to perform the corresponding query through this instruction. If it is for a temporary positioning target (such as the lost mobile phone), the purpose that the user positions it is to determine their location. Therefore, in this scenario, after determining the anchor information, the specific location can be directly determined. Then, the corresponding spatial image and the corresponding anchor point information may be obtained in the local and/or cloud database, and an output operation may be performed on both. It may be used to store, display, use or reprocess the anchor point information. Herein, based on different application scenarios and implementation needs, the specific output method of the anchor point information may be flexibly selected.

For example, for an application scenario where the method of this embodiment is performed on a single device, the anchor point information may be directly output in a display mode on a display component (monitor, projector, etc.) of the current device, so that an operator of the current device may directly see the content of the anchor point information on the display component (for example, an anchor point is directly displayed on a map).

For another example, for an application scenario where the method of this embodiment is performed on a system composed of multiple devices, the anchor point information may be sent to the system through any data communication method (wired connection, NFC, Bluetooth, wifi, cellular mobile network, etc.) to other preset devices as receivers in the system, namely a synchronization terminal, so that the synchronization terminal may perform subsequent processing on it. Optionally, the synchronization terminal may be a preset server. The server is generally set up in the cloud as a data processing and storage center, which may store and distribute anchor point information; where the recipients of distribution are terminal devices, and an owner or operator of these terminal devices may be the current user, a maintainer of the smart terminal, an owner or manager of the related map application, etc.

For another example, in an application scenario where the method of this embodiment is performed on a system composed of multiple devices, the anchor point information may be sent directly to a preset terminal device through any data communication method. The terminal device may be one or more of the aforementioned paragraph.

In this way, the anchor point information may be directly displayed to the current user to determine the specific location of the positioning target to be queried corresponding to the query instruction; or it may be forwarded to other terminals or published on the network for other terminals to obtain and then position the positioning target based on the anchor point information.

As may be seen from the above, the method of target positioning provided by the present application, applied to a smart terminal, includes: obtaining image data of a surrounding environment; generating a spatial image of the surrounding environment based on the image data; determining and obtaining the spatial image corresponding to a positioning target; generating anchor point information corresponding to the positioning target based on the corresponding spatial image; and determining a specific location of the positioning target using the spatial image and the anchor point information. The present application generates a spatial image corresponding to the surrounding real environment as a reference for a specific location, and then generates anchor point information by establishing an anchor point for the specific target, and finally determines the specific location of the target in the spatial image based on the anchor point information. In this way, the relationship between the spatial image and the real map is used, so that when locating the target, the user may use the anchor point information to perform more accurate positioning and improve the positioning accuracy, so as to meet the current user needs and improve the user experience.

In some embodiments, the smart terminal includes a lidar; obtaining the image data of the surrounding environment includes: scanning, by the lidar, the surrounding environment, and generating point cloud image data based on a scanning result.

In some embodiments, the image sensor of the smart terminal may be a Laser Detecting and Ranging (LiDAR,), that is, scanning and detecting a distance. Similar to the working principle of radar, the lidar performs image imaging by emitting and receiving laser beams. In this embodiment, after the lidar completes the scanning of the surrounding environment by emitting and receiving laser beams, the distance is determined by measuring a time difference and phase difference of the emitting and receiving laser signals, and an angle is measured by horizontal rotation scanning, and based on these two parameters a two-dimensional polar coordinate system is established, and then height information is obtained in three dimensions by obtaining different pitch angle signals. High-frequency lasers may obtain a large amount (about 1.5 million) of location point information (referred to as point cloud) in one second, and three-dimensional modeling is performed based on this information. The final image after three-dimensional modeling completed is point cloud image data. Then, similar technology, that is, the flash solution, is also used on some other smart devices, such as mobile phones and Pads. The principle of the Flash solution is similar to that of a camera. The laser it emits is an area array of light. Just like a camera, it takes pictures of the surrounding environment one by one, obtains the point cloud information of the object, and performs three-dimensional modeling based on this information. In contrast, its hardware device is smaller and easier to install in electronic products.

In some embodiments, the smart terminal includes a depth sensor; obtaining the image data of the surrounding environment includes: detecting, by the depth sensor, a distance of an object in the surrounding environment, and generating depth image data based on a detecting result.

In some embodiments, the depth sensor is used to measure and generate meshes that represent surfaces in a 3D environment (e.g., vertices forming connected triangles). Use the depth sensor to obtain the distance from each point on the object in the surrounding real environment to the sensor for distance detection. For example, depth data may include pixel depth values from the viewpoint (sensor location) as well as sensor location and direction data.

In some embodiments, after generating the spatial image of the surrounding environment based on the image data, the method further includes: outputting the spatial image to a cloud database for aggregating and storing, by the cloud database, the spatial image transmitted from the smart terminal and other smart terminals.

In some embodiments, in order to achieve the sharing of spatial images, a cloud database may be used to store spatial images. The cloud database may store and aggregate all spatial images sent by smart terminals, correspond and supplement these images with the points on the network map, so that the smart terminal may later retrieve the spatial images that need points.

In some embodiments, after generating the anchor point information corresponding to the positioning target based on the corresponding spatial image, the method further includes: outputting the anchor point information to the cloud database for aggregating and storing, by the cloud database, a correspondence between the anchor point information and the corresponding spatial image.

In some embodiments, after generating the corresponding anchor point information, the anchor point information may be synchronized to the cloud database to facilitate the smart terminal or other smart terminals to directly retrieve the anchor point information when the anchor point information is needed.

In some embodiments, generating the anchor point information corresponding to the positioning target based on the corresponding spatial image includes: determining a boundary distance from at least one point on the positioning target to a boundary of the corresponding spatial image; generating a three-dimensional coordinate system based on the corresponding spatial image; and determining, based on the boundary distance, a corresponding coordinate point or point set of the positioning target in the three-dimensional coordinate system to generate the anchor point information.

In some embodiments, the anchor point information is generated in order to determine the specific location of the positioning target in the spatial image. The smart terminal may determine the corresponding boundary location of the corresponding spatial image in the real environment by the image sensor (or data returned by the image sensor of other smart terminals), and then use the image sensor to calculate the distance between the point on the positioning target and the boundary location, that is, the boundary distance. The calculated distances are then adjusted based on the proportional relationship between the spatial image and the real environment, and finally these distances are mapped to the spatial image. Then, a three-dimensional coordinate system is established in the spatial image to specifically mark the location of each point in the spatial image, and then the previously calculated boundary distance is converted into coordinates to generate the corresponding coordinate values for the points on the positioning target. Finally, these coordinate values corresponding to the points on the positioning target are the anchor point information.

In some embodiments, determining and obtaining the spatial image corresponding to the positioning target, and generating anchor point information corresponding to the positioning target based on the corresponding spatial image includes: in response to the positioning target being a further smart terminal, determining whether a region where the further smart terminal is located has the corresponding spatial image; in response to the region having the corresponding spatial image, obtaining the corresponding spatial image and sending a positioning instruction to the further smart terminal to generate the anchor point information by the further smart terminal.

In some embodiments, the location of the positioning target may not be near the current smart terminal. For example, if a user wants to position a lost mobile phone, they may first determine the approximate location of the mobile phone (according to related technologies, it is possible to determine which building or place the mobile phone is located in), and then determine whether there is a corresponding spatial image of the place. If there is, the corresponding spatial image may be obtained and the positioning instruction may be sent to the smart terminal (the lost mobile phone), so that the smart terminal may determine its corresponding anchor point information based on the spatial image corresponding to its location, and finally provide the anchor point information to the current smart terminal. Another smart terminal here may calculate the anchor point without using the image sensor. Since it is the positioning target, it may use some of its built-in positioning sensors, gyroscopes and other components to calculate the distance. Of course, in some embodiments, another smart terminal (a lost mobile phone) may also perform only data collection, and calculations and other steps are performed by the current smart terminal that sends the instruction.

In some embodiments, determining the specific location of the positioning target includes: obtaining and displaying network map data; inserting the spatial image at a location corresponding to the spatial image on the network map data; and loading the anchor point information into the spatial image to determine the specific location of the positioning target.

In some embodies, for the convenience of users, navigation can be performed based on the positioning after positioning the target. The network map data may be first obtained. The network map data here may be flat 2D map data, 3D stereoscopic map data, or other types of map data. Then, at the location corresponding to the spatial image (for example, the spatial image depicts a certain Building) the spatial image is loaded, and then the anchor point information is loaded in the spatial image to finally complete the display and output of the specific location of the positioning target. Finally, when the user selects the positioning target when viewing the map, the positioning target may be accurately positioned point-to-point directly based on the spatial image and anchor point information, and then the corresponding navigation information is generated. That is, after loading the anchor point information in the spatial image, the method further includes: positioning the positioning target in the network map data based on the spatial image loaded with the anchor point information to generate navigation information.

In some embodiments, after generating anchor point information corresponding to the positioning target based on the corresponding spatial image, the method further includes: outputting the anchor point information to an external network for other smart terminals to obtain the anchor point information; and determining the specific location of the corresponding positioning target using the anchor point information.

In some embodiments, to achieve the sharing of anchor point information, the anchor point information may be published on the network or stored in a cloud server or database, so that other smart terminals may use this anchor point information to perform the same location positioning on the corresponding positioning target. For example, the anchor point information generated by itself as the positioning target is published on the network, and other smart terminals may position the smart terminal by the anchor point information. In specific application scenarios, users may publish their own anchor point information on the network, so that other users (such as delivery drivers, couriers, taxi drivers, etc.) may obtain the anchor point information and use it to accurately position users.

In some embodiments, the positioning target at least includes: the smart terminal and a target input by a user through the smart terminal.

It should be noted that the method of the embodiments of the present application may be performed by a single device, such as a computer or a server, etc. The method of the embodiments of the present application may also be applied to a distributed scenario, where multiple devices cooperate with each other to complete. In this distributed scenario, one device among the plurality of devices may only perform one or more steps in the method of the embodiments of the present application, and these multiple devices will interact with each other to complete the method.

It should be noted that some embodiments of the present application have been described above. Other embodiments are within the scope of the appended claims. In some cases, the acts or steps recited in the claims may be performed in a different order than in the above embodiments and still achieve the desired results. In addition, the processes depicted in the drawings do not necessarily require a specific order or sequential order shown to achieve the desired results. In certain embodiments, multitasking and parallel processing are also possible or may be advantageous.

Based on the same concept and corresponding to any of the above embodiment's methods, the present application also provides an apparatus for target positioning.

Referring to FIG. 2, the apparatus for target positioning, applied to a smart terminal, includes:
a generation module 210 configured to obtain image data of a surrounding environment and generate a spatial image of the surrounding environment based on the image data;
a positioning module 220 configured to determine and obtain the spatial image corresponding to a positioning target and generate anchor point information corresponding to the positioning target based on the corresponding spatial image; and
an outputting module 230 configured to determine a specific location of the positioning target using the spatial image and the anchor point information.

For convenience of description, when describing the above apparatus, they are divided into various modules to describe their functions separately. Of course, when implementing this application, the functions of each module may be implemented in the same or a plurality of software and/or hardware.

The apparatus of the above embodiments is configured for implementing any of the foregoing embodiments corresponding to the method of target positioning and has the beneficial effects of the corresponding method embodiment, not described herein again.

In some embodiments, the smart terminal includes lidar.

The generation module 210 is also used to:
scan, by the lidar, the surrounding environment, and generate point cloud image data based on a scanning result.

In some embodiments, the smart terminal includes a depth sensor.

The generation module 210 is also used to:
detect, by the depth sensor, a distance of an object in the surrounding environment, and generate depth image data based on a detecting result.

In some embodiments, the generation module 210 is further used to:
output the spatial image to a cloud database for aggregating and storing, by the cloud database, the spatial image transmitted from the smart terminal and other smart terminals.

In some embodiments, the positioning module 220 is also used to:
output the anchor point information to the cloud database for aggregating and storing, by the cloud database, a correspondence between the anchor point information and the corresponding spatial image.

In some embodiments, the positioning module 220 is further used to:
determine a boundary distance from at least one point on the positioning target to a boundary of the corresponding spatial image;
generate a three-dimensional coordinate system based on the corresponding spatial image; and determine, based on the boundary distance, a corresponding coordinate point or point set of the positioning target in the three-dimensional coordinate system to generate the anchor point information.

In some embodiments, the positioning module 220 is further used to:
in response to the positioning target being a further smart terminal, determine whether a region where the further smart terminal is located has the corresponding spatial image;
in response to the region having the corresponding spatial image, obtain the corresponding spatial image and sending a positioning instruction to the further smart terminal to generate the anchor point information by the further smart terminal.

In some embodiments, the output module 230 is further used to:
obtain and display network map data; insert the spatial image at a location corresponding to the spatial image on the network map data; and load the anchor point information into the spatial image to determine the specific location of the positioning target.

In some embodiments, the output module 230 is further used to:
position the positioning target in the network map data based on the spatial image loaded with the anchor point information to generate navigation information.

In some embodiments, the output module 230 is further used to:
output the anchor point information to an external network for other smart terminals to obtain the anchor point information; and determine the specific location of the corresponding positioning target using the anchor point information.

In some embodiments, the positioning target at least includes: the smart terminal and a target input by a user through the smart terminal.

Based on the same concept, corresponding to any of the above embodiment methods, the present application also provides an electronic device, including a memory, a processor, and a computer program stored in the memory and executable on the processor. The processor implements, when executes the program, the method of target positioning described in any of the above embodiments.

FIG. 3 illustrates a more specific schematic diagram of a hardware structure of an electronic device provided in the embodiments of the present application. The device may include: a processor 1010, a memory 1020, input/output interface 1030, a communication interface 1040 and bus 1050. The processor 1010, the memory 1020, the input/output interface 1030 and the communication interface 1040 implement communication connections between each other within the device through the bus 1050.

The processor 1010 may be implemented using a general-purpose Central Processing Unit (CPU), a microprocessor, an Application Specific Integrated Circuit (ASIC), or one or more integrated circuits, etc., for executing related programs to implement the technical solution provided by the embodiments of the present specification.

The memory 1020 may be implemented using a Read Only Memory (ROM), a Random Access Memory (RAM), a static storage device, a dynamic storage device, etc. The memory 1020 may store operating systems and other application programs. When implementing the technical solution provided in the embodiments of this specification by software or firmware, the relevant program code is stored in the memory 1020 and executed by the processor 1010.

The input/output interface 1030 is used to connect an input/output module to achieve information input and output. The input/output module may be configured as a component in the device (not shown in the figure) or externally connected to the device to provide corresponding functions. The input device may include a keyboard, mouse, touch screen, microphone, various sensors, etc., and the output device may include a display, speaker, vibrator, indicator light, etc.

The communication interface 1040 is configured to connect a communication module (not shown in the figure) to achieve communication interaction between this device and other devices. The communication module may communicate through wired methods (such as USB, network cable, etc.) or wireless methods (such as mobile networks, WIFI, Bluetooth, etc.).

The bus 1050 includes a path to transmit information between the respective components of the device (e.g., the processor 1010, the memory 1020, the input/output interface 1030 and the communication interface 1040).

It should be noted that, although the above device only illustrates the processor 1010, the memory 1020, the input/output interface 1030, the communication interface 1040 and the bus 1050, but in the specific implementation process, the device may also include other components necessary for normal operation. In addition, those skilled in the art will appreciate that the above device may include only the components necessary to implement the embodiments of the present specification, without necessarily including all the components shown in the figures.

The electronic device of the above embodiments is configured for implementing any of the foregoing embodiments corresponding to the method of target positioning and has the beneficial effects of the corresponding method embodiment, not described herein again.

Based on the same technical concept, the embodiments of the present application further provide a non-transitory computer readable storage medium storing computer instructions which cause a computer to perform the method of target positioning according to any of embodiments described above.

The computer readable medium of the embodiments of the present application includes both permanent and non-permanent, removable and non-removable media that may be implemented by any method or technology for storing information. Information may be computer-readable instructions, data structures, modules of programs, or other data. Examples of storage medium for computers include, but are not limited to, Phase-change Random Access Memory (PRAM), Static Random Access Memory (SRAM), Dynamic Random Access Memory (DRAM), other types of Random Access Memory (RAM), Read-Only Memory (ROM), Electrically Erasable Programmable Read-Only Memory (EEPROM), flash memory, or other memory technologies, Compact Disc Read-Only Memory (CD-ROM), Digital Versatile Disc (DVD), or other optical storage, magnetic cassettes, magnetic tape magnetic disk storage, or other magnetic storage devices or any other non-transmission media that may be used to store information to be accessed by computing devices.

The computer instructions stored in the storage medium of the above-described embodiments are used to cause the computer to perform the method of target positioning according to any of the embodiments and has the beneficial effects of the corresponding method embodiments, which will not be described again here.

Based on the same concept, corresponding to the method of target positioning described in any of the above embodiments, the present application further provides a computer program product, which includes computer program instructions. In some embodiments, the computer program instructions may be executed by one or more processors of a computer to cause the computer and/or the processor to perform the method of target positioning. Corresponding to the execution actor corresponding to each step in each embodiment of the method of target positioning, the processor that executes the corresponding step may belong to the corresponding execution actor.

The computer program product of the above embodiments is used to cause the computer and/or the processor to perform the method of target positioning according to any of the above embodiments, and has the beneficial effects of the corresponding method embodiments, which will not be described again here.

Those skilled in the art should understand that the above discussion of any embodiments is only illustrative, and is not intended to imply that the scope of the present application (including claims) is limited to these examples; under the thinking of the present application, the above embodiments or technical features in different embodiments can also be combined, the steps may be implemented in any order, and there are many other variations of different aspects of the embodiments of the present application as described above, which are not provided in detail for the sake of brevity.

Additionally, to simplify illustration and discussion, and in order not to obscure the embodiments of the present application, well-known power/ground connections to integrated circuit (IC) chips and other components may or may not be shown in the figures provided. Furthermore, devices may be shown in block diagram form in order to avoid obscuring the embodiments of the present application, and this also takes into account the fact that details regarding the implementation of these block diagram devices are highly dependent on the platform (i.e., these details should be well within the understanding of those skilled in the art) on which the embodiments of the present application are to be implemented. Where specific details (e.g., circuits) are set forth to describe the exemplary embodiments of the present application, it will be apparent to those skilled in the art that the embodiments of the present application may be practiced without these specific details or with changes in these specific details. Accordingly, these descriptions should be considered illustrative rather than restrictive.

Although the present application has been described in connection with its specific embodiments, many substitutions, modifications and variations of these embodiments will be apparent to those skilled in the art from the foregoing description. For example, other memory architectures (e.g., dynamic RAM (DRAM)) may use the embodiments discussed.

The embodiments of the present application is intended to cover all such substitutions, modifications and variations that fall within the broad scope of the appended claims. Therefore, any omissions, modifications, equivalent substitutions, improvements, etc. made within the spirit and principles of the embodiments of the present application shall be included in the protection scope of the present application.

## Claims

1. A method of target positioning, applied to a smart terminal and comprising:
obtaining (101) image data of a surrounding environment;
generating (101) a spatial image of the surrounding environment based on the image data;
determining (102) and obtaining (102) the spatial image corresponding to a positioning target;
generating (102) anchor point information corresponding to the positioning target based on the corresponding spatial image; and
determining (103) a specific location of the positioning target using the spatial image and the anchor point information.

2. The method of claim 1, wherein the smart terminal comprises a lidar;
obtaining (101) the image data of the surrounding environment comprises:
scanning, by the lidar, the surrounding environment, and
generating point cloud image data based on a scanning result.

3. The method of claim 1, wherein the smart terminal comprises a depth sensor;
obtaining (101) the image data of the surrounding environment comprises:
detecting, by the depth sensor, a distance of an object in the surrounding environment, and
generating depth image data based on a detecting result.

4. The method of claim 1, wherein after generating (101) the spatial image of the surrounding environment based on the image data, the method further comprises:
outputting the spatial image to a cloud database for aggregating and storing, by the cloud database, the spatial image transmitted from the smart terminal and other smart terminals.

5. The method of claim 4, wherein after generating (101) the anchor point information corresponding to the positioning target based on the corresponding spatial image, the method further comprises:
outputting the anchor point information to the cloud database for aggregating and storing, by the cloud database, a correspondence between the anchor point information and the corresponding spatial image.

6. The method of claim 1, wherein generating (102) the anchor point information corresponding to the positioning target based on the corresponding spatial image comprises:
determining a boundary distance from at least one point on the positioning target to a boundary of the corresponding spatial image;
generating a three-dimensional coordinate system based on the corresponding spatial image; and
determining, based on the boundary distance, a corresponding coordinate point or point set of the positioning target in the three-dimensional coordinate system to generate the anchor point information.

7. The method of claim 1, wherein determining (102) and obtaining (102) the spatial image corresponding to the positioning target, and generating (102) anchor point information corresponding to the positioning target based on the corresponding spatial image comprises:
in response to the positioning target being a further smart terminal, determining whether a region where the further smart terminal is located has the corresponding spatial image;
in response to the region having the corresponding spatial image, obtaining the corresponding spatial image and sending a positioning instruction to the further smart terminal to generate the anchor point information by the further smart terminal.

8. The method of claim 1, wherein determining (103) the specific location of the positioning target comprises:
obtaining and displaying network map data;
inserting the spatial image at a location corresponding to the spatial image on the network map data; and
loading the anchor point information into the spatial image to determine the specific location of the positioning target.

9. The method of claim 8, wherein after loading the anchor point information into the spatial image, the method further comprises:
positioning the positioning target in the network map data based on the spatial image loaded with the anchor point information to generate navigation information.

10. The method of claim 1, wherein after generating (102) anchor point information corresponding to the positioning target based on the corresponding spatial image, the method further comprises:
outputting the anchor point information to an external network for other smart terminals to obtain the anchor point information; and
determining the specific location of the corresponding positioning target using the anchor point information.

11. The method of claim 1, wherein the positioning target at least comprises: the smart terminal and a target input by a user through the smart terminal.

12. An apparatus for target positioning, applied to a smart terminal and comprising:
a generation module (210) configured to obtain image data of a surrounding environment and generate a spatial image of the surrounding environment based on the image data;
a positioning module (220) configured to determine and obtain the spatial image corresponding to a positioning target and generate anchor point information corresponding to the positioning target based on the corresponding spatial image; and
an outputting module (230) configured to determine a specific location of the positioning target using the spatial image and the anchor point information.

13. An electronic device, comprising a memory (1020), a processor (1010) and a computer program stored in the memory and executable on the processor, the processor implementing, when executes the program, a method according to any of claims 1 to 11.

14. A non-transitory computer readable storage medium having stored computer instructions for causing a computer to implement a method according to any of claims 1 to 11.

15. A computer program product, comprising computer program instructions, the computer program instructions, when running on a computer, causing the computer to perform a method according to any of claims 1 to 11.
